# EUROPEAN PATENT APPLICATION

(11) **EP 3 427 943 A1**
(43) Date of publication of application: **16.01.2019**
(21) Application number: 17763219.7
(22) Date of filing: 07.03.2017
(51) Int. Cl.: B32B 15/08, B05D 1/36, B05D 3/10, B05D 7/02, B05D 7/24, B32B 27/00, C23C 18/20, C25D 5/56, C23C 28/00

(54) **METHOD FOR MANUFACTURING LAMINATE**

(30) Priority: 11.03.2016 JP 2016048331
(71) Applicant: DIC Corporation, Tokyo 174-8520 (JP)
(72) Inventor: FUJIKAWA Wataru, Takaishi-shi Osaka 592-0001 (JP); SHIRAKAMI Jun, Takaishi-shi Osaka 592-0001 (JP); FUKAZAWA Norimasa, Takaishi-shi Osaka 592-0001 (JP)
(74) Representative: Adam, Holger
(86) International application number: PCT/JP2017/008935
(87) International publication number: WO 2017/154879

(57) **Abstract**

Provided is a method for producing a laminate in which a substrate (A) comprising a resin composition containing polyphenylene sulfide (a1), a primer resin layer (B), a metal layer (C), and a metal plating layer (D) are sequentially stacked, wherein the method is characterized by comprising: a first step of applying a fluid material containing a primer resin to the surface of the substrate (A) by an immersion method to form a primer resin layer (B); a second step of applying a fluid material containing metal particles to the surface of the primer resin layer (B) by an immersion method to form a metal layer (C); and a third step of forming a metal plating layer (D) on the surface of the metal layer (C) by an electroplating method, an electroless plating method, or a combination thereof. By the method for producing a laminate, a metal film can be easily formed with high adhesion on the surface of polyphenylene sulfide, which is a hard-to-bond base material.

## Description

### Technical Field

The present invention relates to a laminate-producing method capable of easily forming a metal film with high adhesion on the surface of polyphenylene sulfide, which is a hard-to-bond base material.

### Background Art

In recent years, in the field of automobiles, in order to lower the fuel consumption and the like by reducing the weight, various members that conventionally have been made of a metal are being replaced by engineering plastics which are more lightweight and which have a heat resistance and a chemical resistance. Further, the engineering plastics having heat resistance have attracted attention as a member for power semiconductors that are driven at relatively high temperatures.

Among the engineering plastics, polyphenylene sulfide has excellent heat resistance and chemical resistance and hence is a useful resin. However, when a metal film must be formed on the surface of the polyphenylene sulfide, for example, when the polyphenylene sulfide is used in an electronic circuit, a wiring connector, or the like, there is a problem in that the polyphenylene sulfide is so hard to bond that the metal film formed on polyphenylene sulfide is more likely to peel from the surface of the polyphenylene sulfide.

A method proposed for solving the problem includes subjecting the surface of polyphenylene sulfide to etching treatment with an etching liquid, applying a palladium catalyst to the surface, and then performing electroless copper plating to form a copper platinglayer (see, for example, PTL1). However, this method has a problem in that the surface of polyphenylene sulfide is eroded by the etching liquid to become brittle, so that the copper plating layer formed on such a surface is more likely to peel over time. Therefore, if a conductive pattern is formed by this method, a problem will occur in that the copper plating layer breaks or the conductivity decreases (the resistance increases).

A further proposed method includes roughening the surface of polyphenylene sulfide by sand blasting, shot blasting or the like and then applying a primer resin to the roughened surface to improve adhesion to a film to be formed by metal deposition, metal plating or the like on the surface (see PTL 2). However, for surely obtaining satisfactory adhesion, the surface of polyphenylene sulfide is roughened to a depth of 1 to 10 µm, and therefore this method is unsuitable for a material for a lamp reflector or the like, which needs surface smoothness like a mirror surface.

Thus, there has been a demand for a laminate having a metal film formed with high adhesion on the surface of polyphenylene sulfide, which is a hard-to-bond base material.

### Citation List

### Patent Literature

PTL 1: JP-A-63-14880
PTL 2: JP-A-2002-97292

### Summary of Invention

### Technical Problem

A task to be achieved by the present invention is to provide a laminate-producing method capable of easily forming a metal film with high adhesion on the surface of polyphenylene sulfide, which is a hard-to-bond base material.

### Solution to Problem

The present inventors have conducted extensive and intensive studies with a view towards solving the above-mentioned problems. As a result, it has been found that, when a metal film is formed on the surface of polyphenylene sulfide by a method in which a primer resin layer and a metal layer containing metal particles are individually formed by an immersion method on the surface of polyphenylene sulfide, and then a metal plating layer is formed by an electroplating method, an electroless plating method or the like, the metal film can be easily formed with high adhesion on the surface of polyphenylene sulfide, and the present invention has been completed.

Specifically, according to the invention, there is provided a method for producing a laminate in which a substrate (A) comprising a resin composition containing polyphenylene sulfide (a1), a primer resin layer (B), a metal layer (C), and a metal plating layer (D) are sequentially stacked, the method comprising: a first step of applying a fluid material containing a primer resin to the surface of the substrate (A) by an immersion method to form a primer resin layer (B) ; a second step of applying a fluid material containing metal particles to the surface of the primer resin layer (B) by an immersion method to form a metal layer (C); and a third step of forming a metal plating layer (D) on the surface of the metal layer (C) by an electroplating method, an electroless plating method, or a combination thereof.

### Advantageous Effects of Invention

The method of the invention for producing a laminate allows easy formation of a metal film with high adhesion on the surface of polyphenylene sulfide. Further, even when the surface of polyphenylene sulfide is smooth like a mirror surface, a laminate having a metal film with high adhesion to polyphenylene sulfide can be obtained. Therefore, the laminate obtained by the method of the invention can find applications in the electric and electronic fields, for various types of members, such as an electronic circuit, a wiring connector, an optical connector for optical cable, an optical pickup for Blu-ray, DVD, and the like, an electromagnetic wave shield, a flexible printed board, an RFID for non-contact IC card and the like, and a film capacitor. Further, in the fields of machines including automobiles, the laminate can find applications for a bearing member, a sliding member, a lamp reflector, an electrical component member, an electromagnetic wave shield member, an electric motor peripheral member, a battery member, a heat exchanger member, a press roller for a laser printer and the like, water-related members (water supply pipes), and the like.

### Description of Embodiments

The method of the invention for producing a laminate is a method for producing a laminate in which a substrate (A) comprising a resin composition containing polyphenylene sulfide (a1), a primer resin layer (B), a metal layer (C), and a metal plating layer (D) are sequentially stacked, and comprises: a first step of applying a fluid material containing a primer resin to the surface of the substrate (A) by an immersion method to form a primer resin layer (B) ; a second step of applying a fluid material containing metal particles to the surface of the primer resin layer (B) by an immersion method to form a metal layer (C); and a third step of forming a metal plating layer (D) on the surface of the metal layer (C) by an electroplating method, an electroless plating method, or a combination thereof.

The polyphenylene sulfide (a1) has a resin structure having, as a repeating unit, a structure in which an aromatic ring and a sulfur atom are bonded together, specifically is a resin having, as a repeating unit, a structural component represented by the following general formula (1). 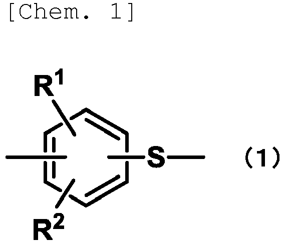 In the formula, each of R¹ and R² independently represents a hydrogen atom, an alkyl group having 1 to 4 carbon atoms, a nitro group, an amino group, a phenyl group, a methoxy group, or an ethoxy group.

R¹ and R² in the general formula (1) above are preferably a hydrogen atom from the viewpoint of an improvement of the polyphenylene sulfide (a1) in mechanical strength, and, in such a case, there can be mentioned a structure represented by the general formula (2) below in which the sulfur atom is bonded at the para position, and a structure represented by the general formula (3) below in which the sulfur atom is bonded at the meta position.

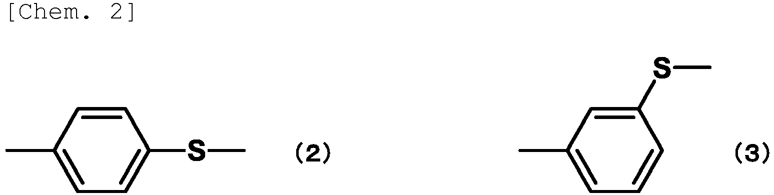

Of these, particularly, with respect to the bonding of the sulfur atom to the aromatic ring in the repeating units, preferred is the structure represented by the general formula (2) above in which the sulfur atom is bonded at the para position from the viewpoint of an improvement of the polyphenylene sulfide (a1) in heat resistance and crystalline properties.

Further, the polyphenylene sulfide (a1) may have not only the structural site represented by the general formula (1) above but also at least one selected from structural sites represented by the general formulae (4) to (7) below. When having the structural sites of the general formulae (4) to (7) below, from the viewpoint of achieving excellent heat resistance and mechanical strength, the molar ratio of these structural sites in the polyphenylene sulfide (a1) is preferably 30 mol% or less, more preferably 10 mol% or less.

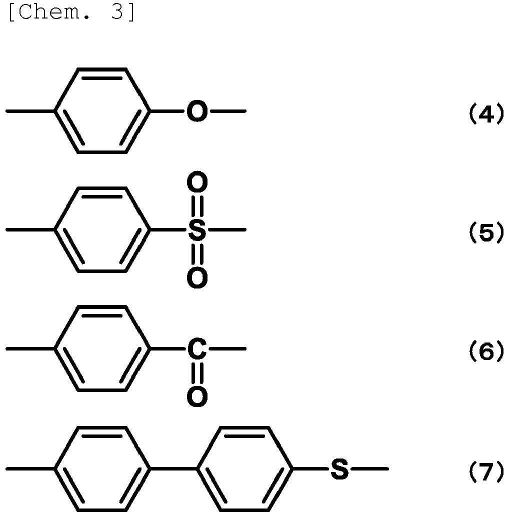

When the structural sites represented by the general formulae (4) to (7) above are contained in the polyphenylene sulfide (a1) , bonding of these structural sites to the structural site represented by the general formula (1) above as repeating units may be either of a random type or of a block type.

Further, the polyphenylene sulfide (a1) may have, in the structure thereof, a trifunctional structural site represented by the general formula (8) below, a naphthyl sulfide bond, or the like. In this case, the molar ratio of these structural sites in the polyphenylene sulfide (a1) is preferably 3 mol% or less, especially, more preferably 1 mol% or less.

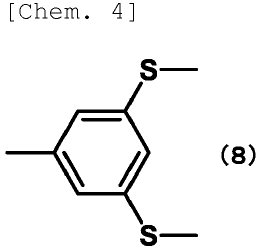

The polyphenylene sulfide (a1) can be produced by, for example, methods (1) to (4) shown below.
(1) A method in which sodium sulfide and p-dichlorobenzene are reacted with each other in an amide solvent, such as N-methylpyrrolidone or dimethylacetamide, or a sulfone solvent, such as sulfolane.
(2) A method in which p-dichlorobenzene is subjected to polymerization in the presence of sulfur and sodium carbonate.
(3) A method in which sodium sulfide is dropwise added to, a mixture of sodium hydrogensulfide and sodium hydroxide is dropwise added to, or a mixture of hydrogen sulfide and sodium hydroxide is dropwise added to a mixed solvent of a polar solvent and p-dichlorobenzene to perform polymerization.
(4) A method of allowing p-chlorothiophenol to undergo self condensation.

Of these, preferred is the method (1), i.e., the method in which sodium sulfide and p-dichlorobenzene are reacted with each other in an amide solvent, such as N-methylpyrrolidone or dimethylacetamide, or a sulfone solvent, such as sulfolane, because the reaction is easy to control and the commercial productivity is excellent. Further, in the method (1), for controlling the degree of polymerization, an alkali, such as an alkali metal salt of a carboxylic acid, an alkali metal salt of sulfonic acid, or a hydroxide, is preferably added.

From the viewpoint of achieving excellent moldability and excellent surface strength, the polyphenylene sulfide (a1) preferably has a melt flow rate (hereinafter, abbreviated to "MFR") in the range of from 1 to 3, 000 g/10 minutes, more preferably in the range of from 5 to 2, 300 g/10 minutes, further preferably in the range of from 10 to 1, 500 g/10 minutes. The melt flow rate is a value as measured in accordance with ASTM D1238-86 at 316°C/under a load of 5, 000 g (orifice: 0.0825±0.002 inch in diameter × 0.315±0.001 inch in length).

Further, with respect to the polyphenylene sulfide (a1), it is preferred that the polyphenylene sulfide (a1) is produced and then subjected to acid treatment and then washed with water because the residual metal ion amount is reduced to improve the moisture resistance properties and further the amount of remaining low molecular-weight impurities by-produced during the polymerization can be reduced.

As an acid used in the above-mentioned acid treatment, for example, acetic acid, hydrochloric acid, sulfuric acid, phosphoric acid, silicic acid, carbonic acid, and propionic acid are preferred. Of these acids, acetic acid and hydrochloric acid are preferred because the residual metal ion amount can be efficiently reduced without decomposing the polyphenylene sulfide (a1).

As a method for the acid treatment, there can be mentioned a method in which the polyphenylene sulfide (a1) is immersed in an acid or an aqueous acid solution. In this instance, if necessary, the acid or aqueous acid solution may be further stirred or heated.

As a specific method for the acid treatment, for example, as a method using acetic acid, there can be mentioned a method in which an aqueous solution of acetic acid at a pH of 4 is first heated to 80 to 90°C, and the polyphenylene sulfide (a1) is immersed in the aqueous solution, and the aqueous solution is stirred for 20 to 40 minutes.

The thus acid-treated polyphenylene sulfide (a1) is washed with water or warm water several times for physically removing the remaining acid or salt. The water used in this instance is preferably distilled water or deionized water.

The polyphenylene sulfide (a1) to be subjected to the acid treatment is preferably in a powdery or particulate form, specifically, may be in the form of particles like pellets, or in the form of a slurry obtained after the polymerization.

In the invention, from the viewpoint of further improving the adhesion to the primer resin layer (B), the resin composition containing the polyphenylene sulfide (a1) constituting the substrate (A) preferably further contains an elastomer (a2). The elastomer (a2) also imparts flexibility and low-temperature impact resistance to the polyphenylene sulfide resin composition constituting the substrate (A).

The elastomer (a2) is preferably one which can be melt-kneaded with the polyphenylene sulfide (a1) so that they are uniformly mixed and dispersed. Specifically, the elastomer having a melting point of 300°C or lower and having rubber elasticity at room temperature is preferred.

Examples of the elastomers (a2) include thermoplastic elastomers, such as a polyolefin elastomer and an olefin copolymer elastomer. More specifically, examples include a styrene-butadiene rubber (SBR), a hydrogenated SBR, an ethylene-propylene rubber (EPM), an ethylene-propylene-diene rubber (EPDM), a butadiene rubber, a chloroprene rubber, a nitrile rubber, a butyl rubber, an acrylic rubber, a silicone rubber, a fluororubber, and a urethane rubber. Of these, an olefin copolymer elastomer is preferred because the adhesion to the primer resin layer (B) can be further improved, and an ethylene copolymer elastomer is more preferred. Further, the elastomer (a2) preferably contains a functional group for improving the adhesion between the substrate (A) and the primer resin layer (B). For example, the elastomer (a2) preferably contains a carboxyl group or an acid anhydride thereof, a sulfonic acid group, a glycidyl group, an alkoxysilyl group, a silanol group, a hydroxyl group, an amino group, an isocyanate group, an amide group, or a vinyl group. Of these, from the viewpoint of improving the adhesion, the elastomer (a2) more preferably contains a carboxyl group or an acid anhydride thereof, or a glycidyl group. These elastomers (a2) can be used individually or in combination.

In view of further improving the processability of the polyphenylene sulfide resin composition to further improve the adhesion to the metal layer (C) or the primer resin layer (B), the amount of the elastomer (a2) contained in the polyphenylene sulfide resin composition is, relative to 100 parts by mass of the polyphenylene sulfide (a1), preferably in the range of from 0.3 to 90 parts by mass, more preferably in the range of from 0.5 to 60 parts by mass, further preferably in the range of from 1 to 40 parts by mass, especially preferably in the range of from 2 to 20 parts by mass.

When the resin composition containing the polyphenylene sulfide (a1) constituting the substrate (A) further contains a fibrous inorganic filler (a3), the heat resistance, mechanical properties, dimensional stability, crystallization rate, and electric properties can be further improved.

Examples of the fibrous inorganic fillers (a3) include inorganic fibers, such as a glass fiber, a carbon fiber, a zinc oxide whisker, an asbestos fiber, a silica fiber, an aluminum borate whisker, a silica-alumina fiber, a zirconia fiber, a boron nitride fiber, a silicon nitride fiber, and a potassium titanate fiber; and metal fibers, such as stainless steel, aluminum, titanium, copper, and brass. Of these, a glass fiber is preferred because of high electrical insulating performance. These fibrous inorganic fillers (a3) can be used individually or in combination.

The fibrous inorganic filler (a3) which has been processed with a surface treatment agent or a sizing agent is preferably used because the adhesion of the fibrous inorganic filler to the components of the resin composition constituting the substrate (A), such as the polyphenylene sulfide (a1), can be improved.

Examples of the surface treatment agents or sizing agents include silane compounds or titanate compounds having a functional group, such as an amino group, an epoxy group, an isocyanate group, or a vinyl group; and polymers, such as an acrylic resin, a urethane resin, and an epoxy resin.

In view of satisfactorily exhibiting the above-mentioned effects, the amount of the fibrous inorganic filler (a3) incorporated into the polyphenylene sulfide resin composition is, relative to 100 parts by mass of the polyphenylene sulfide (a1), preferably in the range of from 10 to 150 parts by mass, more preferably in the range of from 30 to 100 parts by mass, further preferably in the range of from 50 to 80 parts by mass.

In the resin composition containing the polyphenylene sulfide (a1) constituting the substrate (A), in addition to the above-mentioned components (a2) and (a3), inorganic fillers other than the fibrous inorganic filler (a3), such as calcium carbonate, magnesium carbonate, and talc; high heat-resistant resin fibers, such as an aramid fiber; resins, such as polyamide, polysulfone, polyarylsulfone, polyether sulfone, polyarylate, polyphenylene oxide, polyether ketone, polyether ether ketone, polyimide, polyamide-imide, polyether imide, a silicone resin, a phenoxy resin, a fluororesin, a liquid crystalline polymer, and a polyaryl ether; and additives, such as a lubricant, a wax, and a stabilizer, can be incorporated in such an amount that the effects of the present invention are not impaired.

With respect to the method for preparing the resin composition containing the polyphenylene sulfide (a1) constituting the substrate (A), there is no particular limitation, and the resin composition can be produced by means of a known production apparatus and method. For example, there can be mentioned a method in which a compound of the polyphenylene sulfide (a1), elastomer (a2), fibrous inorganic filler (a3) and the like is preliminarily mixed by means of a mixer, such as a Henschel mixer or a tumbler, and then fed to a single-screw or twin-screw extrusion kneader or the like and kneaded at 250 to 350°C, and subjected to granulation and pelletization to obtain a resin composition.

As a method for molding the resin composition into the substrate (A), for example, there can be mentioned a method in which pellets of the resin composition obtained by the above-mentioned preparation method are molded by injection molding, extrusion molding, compression molding or the like.

With respect to the form of the substrate (A), there is no particular limitation, and the substrate having a thickness of about 0.5 to 100 mm is preferred, and the substrate having a thickness of about 0.5 to 10 mm is more preferred. Alternatively, the substrate may be in a three-dimensionally shaped form obtained by molding using a mold, such as a connector or a flexible tube.

The substrate (A) may be in the form of a film or a sheet. The film or sheet preferably has a thickness of about 1 to 5, 000 µm, more preferably about 1 to 300 µm. Further, with respect to the laminate in the invention, when one which is relatively flexible is demanded, the substrate having a thickness of about 1 to 200 µm is preferred.

Further, the surface of the substrate (A) may be subjected to cleaning of contaminant deposited on the surface, or surface treatment for introducing a functional group, such as a hydroxyl group, a carbonyl group, or a carboxyl group, or the like because the adhesion between the substrate (A) and the primer resin layer (B) or the metal layer (C) can be improved. Specifically, the surface of the substrate (A) may be subjected to plasma discharge treatment, such as a corona discharge treatment, dry treatment, such as an ultraviolet light treatment, wet treatment using water, an acid or alkali aqueous solution, or an organic solvent, or the like.

In the laminate obtained by the method of the invention, for obtaining a metal film having high adhesion and luster, the substrate (A) preferably has a surface roughness, in terms of a ten-point average roughness Rz, in the range of from 0.01 to 20 µm, more preferably in the range of from 0.1 to 10 µm, further preferably in the range of from 0.1 to 4 µm.

In the method for producing a laminate of the invention, the adhesion is further improved by forming the primer resin layer (B) between the substrate (A) and the metal layer (C).

In the method for producing a laminate of the invention, in the first step, the primer resin layer (B) is formed by applying a fluid material containing a primer resin to the surface of the substrate (A) by an immersion method.

A fluid material containing any of various resins and a solvent can be used as the primer resin-containing fluid material for forming the primer resin layer (B).

Examples of resins which can be used as the primer resin include a urethane resin, a vinyl resin, a core/shell type composite resin having a urethane resin as a shell and a vinyl resin as a core, an epoxy resin, an imide resin, an amide resin, a melamine resin, a phenolic resin, a urea formaldehyde resin, a blocked isocyanate obtained by reacting a blocking agent, such as phenol, with polyisocyanate, polyvinyl alcohol, and polyvinylpyrrolidone. These resins can be used individually or in combination.

Of the above resins, a resin which forms a reducing compound by heating is preferred because the adhesion to the metal layer (C) can be further improved. Examples of the reducing compounds include phenolic compounds, aromatic amine compounds, sulfur compounds, phosphoric acid compounds, and aldehyde compounds. Of these reducing compounds, preferred are phenolic compounds and aldehyde compounds.

Further, in addition to the above-mentioned method using a resin which forms a reducing compound by heating, there can be mentioned a method of adding a reducing compound to a resin. In this method, examples of reducing compounds to be added include a phenolic antioxidant, an aromatic amine antioxidant, a sulfur antioxidant, a phosphoric acid antioxidant, vitamin C, vitamin E, sodium ethylenediaminetetraacetate, a sulfite, hypophosphorousacid, a hypophosphite, hydrazine, formaldehyde, sodium boron hydride, dimethylamineborane, and phenol.

When the laminate obtained by the method of the invention is used in an electronic circuit or the like, the method of adding a reducing compound to a resin is disadvantageous in that a low molecular-weight component or ionic compound finally remains to lower the electric properties, and therefore the method using a resin which forms a reducing compound by heating is more preferred.

With respect to the primer resin layer (B), from the viewpoint of achieving excellent application properties, the fluid material containing the primer resin preferably contains the resin in an amount of 1 to 70% by mass, more preferably 1 to 20% by mass.

Examples of solvents usable for the primer include various types of organic solvents and aqueous media. Examples of the organic solvents include toluene, ethyl acetate, methyl ethyl ketone, and cyclohexanone. Examples of the aqueous media include water, organic solvents miscible with water, and mixtures thereof.

Examples of the organic solvents miscible with water include alcohol solvents, such as methanol, ethanol, n-propanol, isopropanol, ethyl carbitol, ethyl cellosolve, and butyl cellosolve; ketone solvents, such as acetone and methyl ethyl ketone; alkylene glycol solvents, such as ethylene glycol, diethylene glycol, and propylene glycol; polyalkylene glycol solvents, such as polyethylene glycol, polypropylene glycol, and polytetramethylene glycol; and lactam solvents, such as N-methyl-2-pyrrolidone.

In the case where a process from a primer treatment through plating is carried out in a plating treatment factory, a hazardous material, such as an organic solvent, cannot be used in many plating treatment factories, and, if an organic solvent is used, explosion-proof facilities (transport facilities and drying facilities) are indispensable. Therefore, as a solvent for the primer resin, water is preferably used.

The resin may, if necessary, have a crosslinkable functional group, such as an alkoxysilyl group, a silanol group, a hydroxyl group, or an amino group. With respect to the crosslinked structure formed due to the above crosslinkable functional group, the crosslinked structure maybe formedbefore the fluid material is applied, or the crosslinked structure may be formed after the fluid material is applied, for example, by heating in the drying step or the like.

In the fluid material containing the primer resin, if necessary, a known additive, such as a crosslinking agent, a pH adjustor, a film-forming auxiliary, a leveling agent, a thickening agent, a water repellant, or an anti-foaming agent, may be appropriately added.

Examples of the crosslinking agents include thermal crosslinking agents which undergo a reaction at a temperature as relatively low as about 25 to 100°C to form a crosslinked structure, such as a metal chelate compound, a polyamine compound, an aziridine compound, a metal salt compound, and an isocyanate compound; thermal crosslinking agents which undergo a reaction at a temperature as relatively high as 100°C or more to form a crosslinked structure, such as a melamine compound, an epoxy compound, an oxazoline compound, a carbodiimide compound, and a blocked isocyanate compound; and various photo-crosslinking agents.

The amount of the crosslinking agent used varies depending on the type of the crosslinking agent or the like, but, in view of forming a metal film having excellent adhesion and durability, the crosslinking agent is preferably used in an amount in the range of from 0.01 to 60 parts by mass, more preferably in the range of from 0.1 to 10 parts by mass, further preferably in the range of from 0.1 to 5 parts by mass, relative to 100 parts by mass of the total of the primer resin contained in the fluid material.

When the crosslinking agent is used, a crosslinked structure may be formed in the primer resin layer (B) before forming the metal layer (C), or a crosslinked structure may be formed in the primer resin layer (B) by heating after forming the metal layer (C).

In the first step, upon forming the primer resin layer (B), it is preferred that a solvent, such as an aqueous medium or an organic solvent, contained in the fluid material containing the primer resin is removed in the drying step and then the next step is conducted because the adhesion to the substrate (A) can be further improved. The drying temperature may be in such a temperature range that the solvent can be removed and the substrate (A) is not adversely affected, and drying may be made at room temperature (25°C), but drying by heating is preferred because of a further improvement of the adhesion to the metal layer (C). The temperature for the drying by heating is preferably in the range of from 80 to 200°C, further more preferably in the range of from 80 to 150°C.

The drying by heating can be performed using, for example, an oven, a hot-air drying oven, an infrared drying oven, laser radiation, microwaves, light radiation (flashlight radiation apparatus), or the like.

Further, for the purpose of further improving the adhesion to the metal layer (C), the surface of the primer resin layer (B) may be subjected to surface treatment by, for example, a plasma discharge treatment method, such as a corona discharge treatment method; a dry treatment method, such as an ultraviolet light treatment method; or a wet treatment method using water, an acid or alkaline chemical liquid, an organic solvent, or the like.

The thickness of the primer resin layer (B) varies depending on the use of the laminate obtained by the method of the invention, but, in view of further improving the adhesion between the substrate (A) and the metal layer (C), the thickness of the primer resin layer (B) is preferably in the range of from 10 nm to 30 µm, more preferably in the range of from 10 nm to 1 µm, further preferably in the range of from 10 to 500 nm. The thickness of the primer resin layer (B) can be a desired thickness by controlling the content of the primer resin in the fluid material or the viscosity of the fluid material.

In the method for producing a laminate of the invention, in the second step, the metal layer (C) is formed by applying a fluid material containing metal particles to the surface of the primer resin layer (B) by an immersion method.

As examples of the metals constituting the metal layer (C), that is, the metal particles, there can be mentioned transition metals and compounds thereof, and especially, ionic transition metals are preferred. Examples of the ionic transition metals include copper, silver, gold, nickel, palladium, platinum, cobalt, and chromium. Of these ionic transition metals, copper, silver, and gold are preferred because of low electrical resistance and high resistance to corrosion. The metal layer (C) is preferably porous, and, in this case, the metal layer (C) has voids therein.

The metal particles in the fluid material used for forming the metal layer (C) may be in a particulate form or in a fibrous form. When the metal particles are in a particulate form, those of a nano size are preferred. Specifically, the average particle diameter of the metal particles is preferably in the range of from 1 to 100 nm, more preferably in the range of from 1 to 50 nm. The "average particle diameter" is a volume average particle diameter measured by a dynamic light scattering method with respect to the above-mentioned conductive substance which is diluted with a dispersing good solvent. In the measurement, "Nanotrac UPA-150", manufactured by Microtrac Corp., can be used.

On the other hand, when the metal particles are in a fibrous form, the diameter of the fiber is preferably in the range of from 5 to 100 nm, more preferably in the range of from 5 to 50 nm. The length of the fiber is preferably in the range of from 0.1 to 100 µm, more preferably in the range of from 0.1 to 30 µm.

The content of the metal particles in the fluid material is preferably in the range of from 0.5 to 90% by mass, more preferably in the range of from 1 to 60% by mass, further more preferably in the range of from 2 to 10% by mass.

In the fluid material, a dispersant for dispersing the metal particles in the solvent, a solvent, or, if necessary, an organic compound, such as a surfactant, a leveling agent, a viscosity modifier, a film-forming auxiliary, ananti-foaming agent, or an antiseptic agent, may be incorporated.

With respect to the dispersant, a low molecular-weight or high molecular-weight dispersant is used. Specifically, examples of dispersants include dodecanethiol, 1-octanethiol, triphenylphosphine, dodecylamine, polyethylene glycol, polyvinylpyrrolidone, polyethyleneimine, polyvinylpyrrolidone; fatty acids, such as myristic acid, octanoic acid, and stearic acid; and polycyclic hydrocarbon compounds having a carboxyl group, such as cholic acid, glycyrrhizic acid, and abietic acid. Of these, a high molecular-weight dispersant is preferred because the size of the voids in the metal layer (C) can be increased to improve the adhesion between the metal layer (C) and the metal plating layer (D).

By using a high molecular-weight dispersant as the dispersant, the size of voids formed by removing the dispersant in the metal layer (C) can be increased, as compared to that obtained when using a low molecular-weight dispersant, and thus voids of a size on the order of nano to the order of submicron can be formed. The voids are easily filled with a metal constituting the below-mentioned metal plating layer (D), and the metal filling the voids serves as an anchor, making it possible to remarkably improve the adhesion between the metal layer (C) and the metal plating layer (D).

The amount of the required dispersant used for dispersing the metal particles is preferably 0.01 to 50 parts by mass, more preferably 0.01 to 10 parts by mass, relative to 100 parts by mass of the metal particles.

Further, for facilitating removal of the dispersant in the metal layer (C) so as to more easily form voids to further improve the adhesion between the metal layer (C) and the metal plating layer (D), the amount of the dispersant is preferably 0.1 to 10 parts by mass, more preferably 0.1 to 5 parts by mass, relative to 100 parts by mass of the metal particles.

With respect to the solvent used in the fluid material, an aqueous medium or an organic solvent can be used. Examples of the aqueous media include distilled water, ion-exchanged water, pure water, and utltrapure water. Examples of the organic solvents include alcohol compounds, ether compounds, ester compounds, and ketone compounds.

With respect to the alcohol, there can be used, for example, methanol, ethanol, n-propanol, isopropyl alcohol, n-butanol, isobutyl alcohol, sec-butanol, tert-butanol, heptanol, hexanol, octanol, nonanol, decanol, undecanol, dodecanol, tridecanol, tetradecanol, pentadecanol, stearyl alcohol, allyl alcohol, cyclohexanol, terpineol, terpineol, dihydroterpineol, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, tetraethylene glycol monobutyl ether, propylene glycol monomethyl ether, dipropylene glycol monomethyl ether, tripropylene glycol monomethyl ether, propylene glycol monopropyl ether, dipropylene glycol monopropyl ether, propylene glycol monobutyl ether, dipropylene glycol monobutyl ether, tripropylene glycol monobutyl ether, or the like.

Further, in the fluid material, in addition to the above-mentioned metal particles and solvent, if necessary, ethylene glycol, diethylene glycol, 1,3-butanediol, isoprene glycol, or the like can be used.

Examples of the surfactants include nonionic surfactants, such as polyoxyethylene nonylphenyl ether, polyoxyethylene lauryl ether, polyoxyethylene styrylphenyl ether, polyoxyethylene sorbitol tetraoleate, and a polyoxyethylene-polyoxypropylene copolymer; anionic surfactants, such as fatty acid salts, e.g., sodium oleate, alkylsulfate salts, alkylbenzensulfonates, alkylsulfosuccinates, naphthalenesulfonates, polyoxyethylene alkylsulfates, sodium alkanesulfonate, and sodium alkyldiphenyl ether sulfonate; and cationic surfactants, such as alkylamine salts, alkyltrimethylammonium salts, and alkyldimethylbenzylammonium salts.

With respect to the leveling agent, a general leveling agent can be used, and, for example, there can be mentioned silicone compounds, acetylenediol compounds, and fluorine compounds.

With respect to the viscosity modifier, a general thickening agent can be used, and, for example, there can be mentioned an acrylic polymer and a synthetic rubber latex, which are capable of thickening the resultant mixture when it is rendered alkaline, and a urethane resin, hydroxyethyl cellulose, carboxymethyl cellulose, methyl cellulose, polyvinyl alcohol, hydrogenated caster oil, an amide wax, polyethylene oxide, a metallic soap, and dibenzylidene sorbitol, which are capable of thickening the resultant mixture when the molecules undergo association.

With respect to the film-forming auxiliary, a general film-forming auxiliary can be used, and, for example, there can be mentioned anionic surfactants (such as dioctyl sulfosuccinate sodium salt), hydrophobic nonionic surfactants (such as sorbitan monooleate), polyether-modified siloxane, and a silicone oil.

With respect to the anti-foaming agent, a general anti-foaming agent can be used, and, for example, there can be mentioned a silicone anti-foaming agent, a nonionic surfactant, polyether, higher alcohol, and a polymer surfactant.

With respect to the antiseptic agent, a general antiseptic agent can be used, and, for example, there can be mentioned an isothiazoline antiseptic agent, a triazine antiseptic agent, an imidazole antiseptic agent, a pyridine antiseptic agent, an azole antiseptic agent, an iodine antiseptic agent, and a pyrithione antiseptic agent.

In the second step, upon forming the metal layer (C), it is preferred that a solvent, such as an aqueous medium or an organic solvent, contained in the fluid material containing the metal particles is removed in the drying step and then the next step is conducted because the adhesion to the primer resin layer (B) or the metal plating layer (D) can be further improved.

The drying step may be performed in such a temperature range that the solvent can be removed and the substrate (A) is not adversely affected, and drying may be made at room temperature (25°C) , but drying by heating is preferred because of a further improvement of the adhesion to the primer resin layer (B) or the metal plating layer (D). When drying by heating is performed, the drying temperature is preferably in the range of from 80 to 300°C, and the drying time is preferably about 2 to 200 minutes. The drying step may be conducted in the air, but, for preventing all the metal particles frombeing oxidized, part of or all of the drying step may be conducted in a reducing atmosphere.

Byvirtueof the drying step by heating, the metal particles used for forming the metal layer (C) adhere to one another to be bonded together, and further the organic compounds including the dispersant contained in the fluid material are removed, so that the metal layer (C) becomes porous.

The drying step can be performed using, for example, an oven, a hot-air drying oven, an infrared drying oven, laser radiation, microwaves, light radiation (flashlight radiation apparatus), or the like.

In view of further improving the adhesion to the metal plating layer (D), the amount of the metal layer (C) deposited (after removing the solvent in the fluid material) is preferably in the range of from 1 to 30, 000 mg/m², more preferably in the range of from 50 to 10,000 mg/m², further preferably in the range of from 50 to 5, 000 mg/m². The amount of the metal layer (C) deposited can be a desired deposited amount by controlling the content of the metal particles in the fluid material, the viscosity of the fluid material, or the like.

In the method for producing a laminate of the invention, in the third step, the metal plating layer (D) is formed on the surface of the metal layer (C) by an electroplating method, an electroless plating method, or a combination thereof. Examples of metals constituting the metal plating layer (D) include nickel, copper, chromium, zinc, gold, silver, aluminum, tin, cobalt, palladium, lead, platinum, cadmium, and rhodium. Further, from the viewpoint of the corrosion and conductivity, when used in a conductive pattern or an electromagnetic wave shield, silver or copper is preferably used.

In the laminate obtained by the method of the invention, it is preferred that the voids present in the metal layer (C) are filled with the metal constituting the metal plating layer (D), and it is preferred that the voids in the metal layer (C) including voids present near the interface between the substrate (A) and the metal layer (C) are filled with the metal constituting the metal plating layer (D) because the adhesion between the metal layer (C) and the metal plating layer (D) is further improved.

Wet plating methods, such as an electroplating method and an electroless plating method, are preferred because the voids in the porous metal layer (C) are easily filled with the metal constituting the metal plating layer (D) to further improve the adhesion between the metal layer (C) and the metal plating layer (D), and further a conductive pattern having excellent conductivity can be obtained.

The electroless plating method is a method in which, for example, the metal constituting the metal layer (C) is brought into contact with an electroless plating solution to cause a metal, such as copper, contained in the electroless plating solution to be deposited, forming an electroless plating layer (film) made of a metal film.

Examples of the electroless plating solutions include those which contain a metal, such as copper, nickel, chromium, cobalt, or tin, a reducing agent, and a solvent, such as an aqueous medium or an organic solvent.

Examples of the reducing agents include dimethylaminoborane, hypophosphorous acid, sodium hypophosphite, dimethylamineborane, hydrazine, formaldehyde, sodium boron hydride, and phenol.

With respect to the electroless plating solution, there can be used one which contains, if necessary, an organic acid, e.g., a monocarboxylic acid, such as acetic acid or formic acid; a dicarboxylic acid compound, such as malonic acid, succinic acid, adipic acid, maleic acid, or fumaric acid; a hydroxycarboxylic acid compound, such as malic acid, lactic acid, glycolic acid, gluconic acid, or citric acid; an amino acid compound, such as glycine, alanine, iminodiacetic acid, arginine, aspartic acid, or glutamic acid; an aminopolycarboxylic acid compound, such as iminodiacetic acid, nitrilotriacetic acid, ethylenediaminediacetic acid, ethylenediaminetetraacetic acid, or diethylenetriaminepentaacetic acid, or a soluble salt of the above organic acid (such as a sodium salt, a potassium salt, or an ammonium salt), or a chelating agent, for example, an amine compound, such as ethylenediamine, diethylenetriamine, or triethylenetetramine.

The electroless plating solution is preferably used at a temperature in the range of from 20 to 98°C.

The electroplating method is a method in which, for example, electricity is conducted in a state such that the metal constituting the metal layer (C), or the surface of the electroless plating layer (film) formed by the electroless treatment is in contact with an electroplating solution to cause ametal, such as copper, contained in the electroplating solution to be deposited on the conductive substance constituting the metal layer (C) or the surface of the electroless plating layer (film) formed by the electroless treatment, which is set on a cathode, forming an electroplating layer (metal film).

Examples of the electroplating solutions include those which contain a sulfide of a metal, such as copper, nickel, chromium, cobalt, or tin, sulfuric acid, and an aqueous medium. Specifically, there can be mentioned an electroplating solution containing copper sulfate, sulfuric acid, and an aqueous medium.

The electroplating solution is preferably used at a temperature in the range of from 20 to 98°C.

The formation of the metal plating layer (D) is preferably made by an electroless plating method which can be more easily conducted merely by immersing the substrate (A) having formed thereon the metal layer (C) in an electroless plating solution.

The thickness of the metal plating layer (D) is preferably in the range of from 0.1 to 500 µm. The thickness of the metal plating layer (D) can be controlled by the treatment time, current density, the amount of the plating additive used, or the like in the plating treatment step for forming the metal plating layer (D).

### Examples

Hereinbelow, the present invention will be described in detail with reference to the following Examples.

### [Production Example 1: Production of resin composition (B-1) for primer resin layer]

To a reaction vessel equipped with a stirrer, a reflux condenser, a nitrogen gas introducing pipe, a thermometer, and a dropping funnel were added 350 parts by mass of deionized water and 4 parts by mass of a surfactant ("LATEMUL E-118B", manufactured by Kao Corporation; effective component: 25% by mass), and the temperature of the resultant mixture was increased to 70°C while introducing nitrogen gas.

While stirring, part of a monomer pre-emulsion (5 parts by mass), which had been obtained by mixing together a vinyl monomer mixture containing 47.0 parts by mass of methyl methacrylate, 5.0 parts by mass of glycidyl methacrylate, 45.0 parts by mass of n-butyl acrylate, and 3.0 parts by mass of methacrylic acid, 4 parts by mass of a surfactant ("Aquaron KH-1025", manufactured by Dai-ichi Kogyo Seiyaku Co., Ltd.; effective component: 25% by mass), and 15 parts by mass of deionized water, was added to the reaction vessel, and subsequently 0.1 part by mass of potassium persulfate was added and the resultant mixture was subjected to polymerization for 60 minutes while maintaining the temperature in the reaction vessel at 70°C.

Then, while maintaining the temperature in the reaction vessel at 70°C, the remaining monomer pre-emulsion (114 parts by mass) and 30 parts by mass of an aqueous solution of potassium persulfate (effective component: 1.0% by mass) were individually dropwise added to the vessel using the respective dropping funnels over 180 minutes. After completion of the dropwise addition, the resultant mixture was stirred at the same temperature for 60 minutes.

The temperature in the reaction vessel was lowered to 40°C, and then deionized water was used so that the nonvolatile content of the resultant mixture became 10.0% by mass, followed by filtration using a 200-mesh filter cloth, to obtain a resin composition (B-1) for primer resin layer used in the present invention.

### [Preparation Example 1: Preparation of fluid material (1) containing metal particles]

Using as a dispersant a compound having polyoxyethylene added to polyethyleneimine, silver particles having an average particle diameter of 30 nm were dispersed in a mixed solvent of 45 parts by mass of ethylene glycol and 55 parts by mass of ion-exchanged water to prepare a fluid material (1) containing nano-size metal particles and a dispersant. The solids content was 5% by weight.

### [Preparation of polyphenylene sulfide (PPS) substrate (A-1)]

A hundred parts by mass of linear polyphenylene sulfide (MFR as measured according to ASTM D1238-86: 600 g/10 minutes), 58.8 parts by mass of a chopped glass fiber ("FT562", manufactured by Asahi Fiber Glass Co., Ltd.; fibrous inorganic filler), 8.4 parts by mass of an ethylene-methacrylic acid copolymer of a zinc ion type ("Himilan 1855", manufactured by DuPont-Mitsui Polychemicals Co., Ltd.), and 0.8 part by mass of a montanic acid composite ester wax ("Licolub WE40", manufactured by Clariant Japan K.K.) were uniformly mixed with one another, and then melt-kneaded using a 35 mm φ twin-screw extruder at 290 to 330°C to obtain a polyphenylene sulfide resin composition. The obtained polyphenylene sulfide resin composition was molded by means of an injection molding machine to obtain a substrate (A-1) having a 50 mm × 105 mm × 2 mm size.

### [Example 1]

The above-obtained substrate (A-1) was immersed in a 5% by mass aqueous dispersion of the resin composition (B-1) for primer resin layer obtained in Production Example 1 for 10 seconds. Then, the substrate (A-1) was pulled out of the dispersion, and allowed to stand at 25°C for 30 minutes to form a primer resin layer (thickness: 0.15 µm) on the substrate (A-1) .

Then, the substrate having the primer resin layer formed thereon was immersed in the fluid material (1) containing metal nanoparticles obtained in Preparation Example 1 for 10 seconds. The substrate was then pulled out of the fluid material, and allowed to stand at 25°C for 30 minutes to form on the substrate a silver layer (thickness: about 0.1 µm) corresponding to the metal layer (C) .

Subsequently, the surface of the above-obtained silver layer was subjected to electroless copper plating. The substrate having the silver layer was immersed in an electroless copper plating solution ("OIC Copper", manufactured by Okuno Chemical Industries Co., Ltd.; pH: 12.5) at 55°C for 20 minutes to form an electroless copper plating film (thickness: 0.5 µm).

Then, the surface of the above-obtained electroless copper plating was set on a cathode, and phosphorus-containing copper was set on an anode, and electroplating was performed using an electroplating solution containing copper sulfate at a current density of 2.5 A/dm² for 30 minutes to stack a copper plating layer having a thickness of 15 µm on the surface of the silver layer. As the electroplating solution, one which contains 70 g/liter of copper sulfate, 200 g/liter of sulfuric acid, 50 mg/liter of chloride ions, and 5 g/liter of Top Lucina SF (brightener, manufactured by Okuno Chemical Industries Co., Ltd.) was used.

In accordance with the above-mentioned method, a laminate (1) in which the substrate (A), primer resin layer (B), metal layer (C), and metal plating layer (D) are sequentially stacked was obtained.

### [Example 2]

The substrate (A-1) used was the same as in Example 1. The above-obtained substrate (A-1) was immersed in a 5% by mass aqueous dispersion of the resin composition (B-1) for primer resin layer obtained in Production Example 1 for 10 seconds. Then, the substrate (A-1) was pulled out of the dispersion, and allowed to stand at 25°C for 30 minutes to form a primer resin layer (thickness: 0.15 µm) on the substrate (A-1).

Then, the substrate having the primer resin layer formed thereon was immersed in the fluid material (1) containing metal nanoparticles for 10 seconds. The substrate was then pulled out of the fluid material and allowed to stand for one minute, and then dried using a hot-air dryer at 200°C for 5 minutes to form on the substrate a silver layer (thickness: 0.1 µm) corresponding to the metal layer (C).

Subsequently, the surface of the above-obtained silver layer was subjected to electroless copper plating. The substrate having the silver layer was immersed in an electroless copper plating solution ("OIC Copper", manufactured by Okuno Chemical Industries Co., Ltd.; pH: 12.5) at 55°C for 20 minutes to form an electroless copper plating film (thickness: 0.5 µm).

Then, the surface of the above-obtained electroless copper plating was set on a cathode, and phosphorus-containing copper was set on an anode, and electroplating was performed using an electroplating solution containing copper sulfate at a current density of 2.5 A/dm² for 30 minutes to stack a copper plating layer having a thickness of 15 µm on the surface of the silver layer. As the electroplating solution, one which contains 70 g/liter of copper sulfate, 200 g/liter of sulfuric acid, 50 mg/liter of chloride ions, and 5 g/liter of Top Lucina SF (brightener, manufactured by Okuno Chemical Industries Co., Ltd.) was used.

In accordance with the above-mentioned method, a laminate (2) in which the substrate (A), primer resin layer (B), metal layer (C), and metal plating layer (D) are sequentially stacked was obtained.

### [Example 3]

The substrate (A-1) used was the same as in Example 1. The above-obtained substrate (A-1) was immersed in a 5% by mass aqueous dispersion of the resin composition (B-1) for primer resin layer obtained in Production Example 1 for 10 seconds. Then, the substrate (A-1) was pulled out of the dispersion and allowed to stand for one minute, and then dried using a hot-air dryer at 80°C for 5 minutes to form a primer resin layer (thickness: 0.13 µm) on the substrate (A-1).

Then, the substrate having the primer resin layer formed thereon was immersed in the fluid material (1) containing metal nanoparticles for 10 seconds. The substrate was then pulled out of the fluid material, and allowed to stand at 25°C for 30 minutes to form on the substrate a silver layer (thickness: 0.1 µm) corresponding to the metal layer (C).

Subsequently, the surface of the above-obtained silver layer was subjected to electroless copper plating. The substrate having the silver layer was immersed in an electroless copper plating solution ("OIC Copper", manufactured by Okuno Chemical Industries Co., Ltd.; pH: 12.5) at 55°C for 20 minutes to form an electroless copper plating film (thickness: 0.5 µm).

Then, the surface of the above-obtained electroless copper plating was set on a cathode, and phosphorus-containing copper was set on an anode, and electroplating was performed using an electroplating solution containing copper sulfate at a current density of 2.5 A/dm² for 30 minutes to stack a copper plating layer having a thickness of 15 µm on the surface of the silver layer. As the electroplating solution, one which contains 70 g/liter of copper sulfate, 200 g/liter of sulfuric acid, 50 mg/liter of chloride ions, and 5 g/liter of Top Lucina SF (brightener, manufactured by Okuno Chemical Industries Co., Ltd.) was used.

In accordance with the above-mentioned method, a laminate (3) in which the substrate (A), primer resin layer (B), metal layer (C), and metal plating layer (D) are sequentially stacked was obtained.

### [Example 4]

The substrate (A-1) used was the same as in Example 1. The above-obtained substrate (A-1) was immersed in a 5% by mass aqueous dispersion of the resin composition (B-1) for primer resin layer obtained in Production Example 1 for 10 seconds. Then, the substrate (A-1) was pulled out of the dispersion and allowed to stand for one minute, and then dried using a hot-air dryer at 80°C for 5 minutes to form a primer resin layer (thickness: 0.13 µm) on the substrate (A-1).

Then, the substrate having the primer resin layer formed thereon was immersed in the fluid material (1) containing metal nanoparticles for 10 seconds. The substrate was then pulled out of the fluid material and allowed to stand for one minute, and then dried using a hot-air dryer at 200°C for 5 minutes to form on the substrate a silver layer (thickness: 0.1 µm) corresponding to the metal layer (C).

Subsequently, the surface of the above-obtained silver layer was subjected to electroless copper plating. The substrate having the silver layer was immersed in an electroless copper plating solution ("OIC Copper", manufactured by Okuno Chemical Industries Co., Ltd.; pH: 12.5) at 55°C for 20 minutes to form an electroless copper plating film (thickness: 0.5 µm).

Then, the surface of the above-obtained electroless copper plating was set on a cathode, and phosphorus-containing copper was set on an anode, and electroplating was performed using an electroplating solution containing copper sulfate at a current density of 2.5 A/dm² for 30 minutes to stack a copper plating layer having a thickness of 15 µm on the surface of the silver layer. As the electroplating solution, one which contains 70 g/liter of copper sulfate, 200 g/liter of sulfuric acid, 50 mg/liter of chloride ions, and 5 g/liter of Top Lucina SF (brightener, manufactured by Okuno Chemical Industries Co., Ltd.) was used.

In accordance with the above-mentioned method, a laminate (4) in which the substrate (A), primer resin layer (B), metal layer (C), and metal plating layer (D) are sequentially stacked was obtained.

### [Comparative Example 1]

The substrate (A-1) used was the same as in Example 1, and the substrate was subjected to roughening treatment and then a metal plating layer (D) was formed on the substrate. Specifically, the substrate (A-1) was immersed in an aqueous alkali cleaner solution ("Ace Clean A-220", manufactured by Okuno Chemical Industries Co., Ltd.; 50 g/L; 55°C) for 5 minutes, and washed with water for 2 minutes (degreasing step) . Then, the substrate was immersed in an etching liquid (which is a solution obtained by dissolving 100 g of ammonium hydrogenfluoride in 600 ml of a 65% by mass aqueous solution of nitric acid; 50°C) for 10 minutes, and then washed with water for 2 minutes (etching step).

Then, the resultant substrate was immersed in an aqueous surfactant solution ("Condiriser SP", manufactured by Okuno Chemical Industries Co., Ltd.; 150 ml/L; 45°C) for 4 minutes, and then washed for one minute (conditioning step). Then, the substrate was immersed in an aqueous solution of hydrochloric acid (36% by mass hydrochloric acid; 150 ml/L; room temperature) for one minute.

Then, the resultant substrate was immersed in a palladium-tin catalyst solution ("OPC Catalyst M", manufactured by Okuno Chemical Industries Co., Ltd.; 400 ml/L; room temperature) for 5 minutes, and then washed with water for 30 seconds. Further, the substrate was immersed in an aqueous solution of hydrochloric acid (36% by mass hydrochloric acid; 150 ml/L; 45°C) for 5 minutes, and then washed with water for 30 seconds (catalyst application step).

Subsequently, the surface of the above-obtained silver layer was subjected to electroless copper plating. The substrate having the silver layer was immersed in an electroless copper plating solution ("OIC Copper", manufactured by Okuno Chemical Industries Co., Ltd.; pH: 12.5) at 55°C for 20 minutes to form an electroless copper plating film (thickness: 0.5 µm).

Then, the surface of the above-obtained electroless copper plating was set on a cathode, and phosphorus-containing copper was set on an anode, and electroplating was performed using an electroplating solution containing copper sulfate at a current density of 2.5 A/dm² for 30 minutes to stack a copper plating layer having a thickness of 15 µm on the surface of the silver layer. As the electroplating solution, one which contains 70 g/liter of copper sulfate, 200 g/liter of sulfuric acid, 50 mg/liter of chloride ions, and 5 g/liter of Top Lucina SF (brightener, manufactured by Okuno Chemical Industries Co., Ltd.) was used.

In accordance with the above-mentioned method, a laminate (R1) in which the substrate (A), metal layer (C), and metal plating layer (D) are sequentially stacked was obtained.

### [Comparative Example 2]

The substrate (A-1) used was the same as in Example 1, and a method was conducted in which a plating primary layer (corresponding to the metal layer C) was formed using a sputtering method and then a metal plating layer (D) was formed by electroplating. As a sputtering method, a method for forming a film by magnetron sputtering using nickel as a metal was used, obtaining a nickel layer corresponding to the metal layer C (thickness: 0.3 µm).

Then, the surface of the above-obtained substrate having the nickel film formed thereon was set on a cathode, and phosphorus-containing copper was set on an anode, and electroplating was performed using an electroplating solution containing copper sulfate at a current density of 2.5 A/dm² for 30 minutes to stack a copper plating layer having a thickness of 15 µm on the surface of the silver layer. The electroplating solution used contained 70 g/liter of copper sulfate, 200g/liter of sulfuric acid, 50 mg/liter of chloride ions, and 5 g/liter of Top Lucina SF (brightener, manufactured by Okuno Chemical Industries Co., Ltd.).

In accordance with the above-mentioned method, a laminate (R2) in which the substrate (A), metal layer (C), and metal plating layer (D) are sequentially stacked was obtained.

### <Measurement of a peel strength before heating>

With respect to each of the above-obtained laminates, a peel strength was measured using "Autograph AGS-X 500N", manufactured by Shimadzu Corporation. The lead width used in the measurement was 5 mm, and the peel angle was 90°. The peel strength has a tendency that the larger the thickness of the metal plating layer, the higher the measured value. The measurement of a peel strength in the present invention was conducted using as a standard the value measured for the metal plating layer having a thickness of 15 µm.

### <Measurement of a peel test after heating>

The above-obtained laminates were individually heated by storing them in a dryer set at 150°C for 168 hours. After the heating, a peel strength was measured by the same method as mentioned above.

### <Evaluation of heat resistance>

Using the above-measured peel strength values before and after the heating, a retention ratio of the values before and after the heating was determined by making a calculation, and the heat resistance was evaluated in accordance with the following criteria.
A: The retention ratio is 80% or more.
B: The retention ratio is 70 to less than 80%.
C: The retention ratio is 50 to less than 70%.
D: The retention ratio is less than 50%.

The formulations of the polyphenylene sulfide resin compositions constituting the substrates used in Examples 1 to 6 and Comparative Examples 1 and 2, the results of the measurement of peel strength before and after the heating, and the results of the evaluation of heat resistance are shown in Table 1.

**[Table 1]**

| Table 1 | | | Example 1 | Example 2 | Example 3 | Example 4 | Comparative Example 1 | Comparative Example 2 |
|---|---|---|---|---|---|---|---|---|
| Laminate | | | (1) | (2) | (3) | (4) | (R1) | (R2) |
| Drying temperature (°C) in forming primer resin layer (B) | | | 25 | 25 | 80 | 80 | - | - |
| Drying temperature (°C) in forming metal layer (C) | | | 25 | 200 | 25 | 200 | - | - |
| Results of evaluation | Peel strength (N/m) of laminate | Before heating | 400 | 550 | 500 | 680 | 200 | 100 |
| | | After heating | 300 | 460 | 390 | 660 | 50 | 15 |
| | Peel strength retention ratio (%) | | 75 | 84 | 78 | 97 | 25 | 15 |
| | Heat resistance | | B | A | B | A | D | D |

The results shown in Table 1 have demonstrated that the laminates (1) to (4) obtained in Examples 1 to 4, which correspond to the laminate according to the present invention, have a high peel strength, show less reduction in peel strength after the heating, and have a high retention ratio of the peel strength after the heating and excellent heat resistance.

On the other hand, it has been demonstrated that the laminate (R1) obtained in Comparative Example 1, which is an example obtained by subjecting the substrate to roughening treatment and then forming a copper plating film on the substrate, has a very low peel strength both before and after the heating.

Further, it has been demonstrated that the laminate (R2) obtained in Comparative Example 2, which is an example obtained by forming the metal layer (C) on the substrate using a sputtering method and then performing copper plating, has a very low peel strength both before and after the heating.

## Claims

1. A method for producing a laminate in which a substrate (A) comprising a resin composition containing polyphenylene sulfide (a1), a primer resin layer (B), a metal layer (C), and a metal plating layer (D) are sequentially stacked, the method comprising:
a first step of applying a fluid material containing a primer resin to a surface of the substrate (A) by an immersion method to form a primer resin layer (B);
a second step of applying a fluid material containing metal particles to a surface of the primer resin layer (B) by an immersion method to form a metal layer (C); and
a third step of forming a metal plating layer (D) on a surface of the metal layer (C) by an electroplating method, an electroless plating method, or a combination thereof.

2. The method for producing a laminate according to claim 1, wherein the resin composition containing the polyphenylene sulfide (a1) further contains an elastomer (a2).

3. The method for producing a laminate according to claim 1 or 2, wherein the metal particles are at least one member selected from the group consisting of silver nanoparticles, copper nanoparticles, and palladium nanoparticles.

4. The method for producing a laminate according to any one of claims 1 to 3, wherein the primer resin is an aqueous resin.

5. The method for producing a laminate according to any one of claims 1 to 4, wherein a solvent for the fluid material containing the metal is at least one member selected from the group consisting of water and an alcohol.

6. The method for producing a laminate according to any one of claims 1 to 5, wherein the metal constituting the metal plating layer (D) is at least one member selected from the group consisting of nickel, copper, chromium, zinc, gold, silver, aluminum, tin, cobalt, palladium, lead, platinum, cadmium, and rhodium.
